# EUROPÄISCHE PATENTSCHRIFT

(11) **EP 2 884 938 B1**
(45) Veröffentlichungstag und Bekanntmachung des Hinweises auf die Patenterteilung: **12.07.2017**
(21) Anmeldenummer: 13750676.2
(22) Anmeldetag: 09.08.2013
(51) Int. Cl.: A61C 5/40, A61C 17/022, A61C 5/55, A61C 17/02

(54) **VORRICHTUNG ZUR TROCKNUNG VON WURZELKANÄLEN**
DEVICE FOR DRYING ROOT CANALS
DISPOSITIF POUR ASSÉCHER DES CANAUX RADICULAIRES

(30) Priorität: 20.08.2012 DE 102012107589
(43) Veröffentlichungstag der Anmeldung: 24.06.2015
(73) Patentinhaber: Tilse, Rainer, 75172 Pforzheim (DE)
(72) Erfinder: Tilse, Rainer, 75172 Pforzheim (DE)
(74) Vertreter: Twelmeier Mommer & Partner
(86) Internationale Anmeldenummer: PCT/EP2013/066684
(87) Internationale Veröffentlichungsnummer: WO 2014/029638

(56) Entgegenhaltungen:
- DE-C- 936 591
- US-A1- 2011 003 264

## Beschreibung

Die Erfindung betrifft ein zahnärztliches Instrument zur Trocknung von Wurzelkanälen. Eine Vorrichtung mit dem im Oberbegriff des Anspruchs 1 angegebenen Merkmale ist aus der US 2011/0003264 A1 bekannt.

Die Trocknung der Wurzelkanäle ist ein wichtiger Arbeitsschritt einer zahnärztlichen Wurzelbehandlung. Feuchtigkeit im Wurzelkanal bietet Bakterien Lebensraum und erschwert die Anhaftung von Wurzelfüllpaste.

Bei einer Wurzelbehandlung wird der Wurzelkanal mechanisch und durch verschiedene wässrige Spüllösungen gereinigt. Anschließend muss der Wurzelkanal getrocknet werden. Üblicher Weise werden dazu Papierspitzen in den Wurzelkanal eingebracht, die die Flüssigkeit aufsaugen. Dies wird wiederholt, bis die Papierspitzen nicht mehr feucht sind. Der Wurzelkanal soll nämlich möglichst trocken und keimarm sein. Im nächsten Arbeitsschritt wird die Wurzelfüllung eingebracht.

Aufgabe der vorliegenden Erfindung ist es einen Weg aufzuzeigen, wie Zahnärzten die Trocknung von Wurzelkanälen erleichtert werden kann.

Diese Aufgabe wird durch eine Vorrichtung mit den im Anspruch 1 angegebenen Merkmalen gelöst. Vorteilhafte Weiterbildungen der Erfindung sind Gegenstand von Unteransprüchen.

Eine erfindungsgemäße Vorrichtung zur Trocknung eines Wurzelkanals weist eine Kanüle zum Einblasen eines Gasstroms in den Wurzelkanal, ein Handstück zum Halten der Kanüle, und ein Sicherheitsventil, um einen Anstieg des Gasdrucks in der Kanüle über einen kritischen Schwellenwert hinaus zu verhindern, auf. Die Vorrichtung kann auch als ein System zur Trocknung eines Wurzelkanals bezeichnet werden, da zur Trocknung eines Wurzelkanals mehrere Komponenten mit einander verbunden werden müssen, nämlich Handstück und Kanüle.

Durch das Einblasen eines Gasstroms lässt sich ein Wurzelkanal bequem und gründlich trocknen. Zahnärzten wird mit einer erfindungsgemäßen Vorrichtung eine Wurzelbehandlung wesentlich erleichtert.

Das Handstück kann über einen Schlauch an eine Quelle des Gasstroms, beispielsweise eine Pumpe oder einen Druckgasbehälter anschließen lassen. Zu dem Behandlungsstuhl eines Zahnarztes gehört eine umfangreiche Apparatur, die in der Regel ohnehin eine Pumpe enthält. Das Handstück zum Anschließen an eine solche Apparatur vorgesehen sein, beispielsweise indem es auf das eines Schlauches aufgesteckt wird. Die erfindungsgemäße Vorrichtung kann aber auch eine eigene Pumpe aufweisen, an die sie es über einen Schlauch angeschlossen ist.

Die Vorrichtung weist ein Sicherheitsventil auf, um einen Anstieg des Gasdrucks in der Kanüle über einen vorgegebenen Schwellenwert hinaus zu verhindern. Bei hohem Druck kann eingeblasenes Gas nämlich über die Wurzelspitze in periapikales Gewebe eindringen und dort Schäden verursachen. Eine in den Wurzelkanal eingeführte Kanüle kann den Wurzelkanal unter Umständen so weitgehend verschließen, dass der Gasstrom nur noch in unzureichendem Maße an der Außenseiten der Kanüle entlang wieder aus dem Wurzelkanal austreten kann. Damit dies nicht zu einem gefährlichen Druckanstieg führt, hat eine erfindungsgemäße Vorrichtung ein Sicherheitsventil, das den Druck in der Kanüle und damit auch in dem Wurzelkanal auf einen zahnmedizinisch unbedenklichen Wert begrenzt. Das Sicherheitsventil ist bevorzugt ein Überdruckventil, das sich öffnet, sobald der Gasdruck einen vorgegebenen Schwellenwert erreicht und lässt dann den Gasstrom an der Kanüle vorbei austreten, beispielsweise durch eine dafür vorgesehene Öffnung des Handstücks. Das Sicherheitsventil ist bevorzugt in das Handstück eingebaut. Ein Sicherheitsventil lässt sich aber beispielsweise auch in die Kanüle integrieren, beispielsweise in Form einer Berstscheibe. In einem Kanülenabschnitt, der nicht zum Einführen in den Wurzelkanal vorgesehen ist, kann ein Teilbereich der Mantelfläche so dünn ausgebildet sein, dass die Kanüle dort aufplatzt, sobald der Druck in der Kanüle einen vorgegebenen Schwellenwert übersteigt. Ein in die Kanüle integriertes Sicherheitsventil kann also als ein geschwächter Wandbereich der Kanüle ausgebildet sein. Dieser Wandbereich kann in einem so großen Abstand von dem Ende vorgesehen sein, das zur Trocknung in den Wurzelkanal eingeführt wird, dass der geschwächte Wandbereich außerhalb des Wurzelkanals bleibt und bei einem Aufplatzen dieses Wandbereichs Gas problemlos aus der Kanüle austreten kann.

Die Kanüle kann als ein Röhrchen oder als ein Schlauch ausgebildet sein. Eine Kanüle in Form eines Schlauchs hat den Vorteil, dass sie sich flexible an die räumlichen Gegebenheiten im Mund eines Patienten anpassen und deshalb leichter in einen Wurzelkanal einführen lässt. Bevorzugt ist die Kanüle aus Metall, beispielsweise einer Nickel-Titan Legierung; sie kann aber z.B. auch aus Kunststoff sein. Kanülen aus superelastischen Legierungen, wie z.B. Nitinol oder andere Nickel-Titan Legierungen, lassen sich sehr biegsam als Schläuche herstellen.

Die Kanüle ist bevorzugt austauschbar an dem Handstück befestigt. Beispielsweise kann das Handstück eine Öffnung aufweisen, in welche die Kanüle gesteckt wird. Die Kanüle kann dann nach jeder Behandlung vorteilhaft ausgetauscht werden, wodurch sich hygienische Probleme vermeiden lassen. Ein Aspekt der vorliegenden Erfindung betrifft deshalb auch eine Kanüle als Verbrauchsteil einer erfindungsgemäßen Vorrichtung bzw. eines erfindungsgemäßen Systems.

Für den Gasstrom kann Luft oder auch ein anderes Gas, beispielsweise Stickstoff oder Sauerstoff, verwendet werden. Sauerstoff ist in technischer Reinheit kostengünstig erhältlich und hat den Vorteil, anaerobe Keime, wie sie in Wurzelkanälen häufig vorkommen abzutöten. Ein Luftstrom kann mittels einer Pumpe erzeugt werden, die als Teil der erfindungsgemäßen Vorrichtung ausgebildet ist oder ein externes Gerät ist, an das die erfindungsgemäße Vorrichtung angeschlossen. Beispielsweise kann die erfindungsgemäße Vorrichtung an eine Pumpe angeschlossen werden, die in einem zahnärztlichen Behandlungsstuhl eingebaut ist.

Wenn man den Gasstrom einem Druckgasbehälter entnimmt, also beispielsweise Stickstoff in den Wurzelkanal bläst, kann vorteilhaft ohne zusätzliche Maßnahmen ein sehr trockener Gasstrom erzeugt werden, der kaum Feuchtigkeit enthält und folglich besonders gut und rasch den Wurzelkanal trocknen kann.

Eine weitere vorteilhafte Weiterbildung der Erfindung sieht vor, dass die Vorrichtung ein elektrisches Heizelement zum Erwärmen des Gasstroms aufweist. Ein erwärmter Gasstrom kann Feuchtigkeit besser aufnehmen und deshalb einen Wurzelkanal schneller trocknen. Das Heizelement kann Teil des Handstücks sein oder beispielsweise den Schlauch beheizen, durch welchen dem Handstück der Gasstrom zugeführt wird. Schläuche können mit Heizdraht effizient beheizt werden, insbesondere mit wendelförmigem Heizdraht.

Bevorzugt hat eine erfindungsgemäße Vorrichtung eine Steuerschaltung, um die Temperatur des Gasstroms auf einen Sollwert zu regeln. Eine Überhitzung des Gasstroms, die zu einer Schädigung des Wurzelkanals oder periapikalem Gewebe führen könnte, kann durch eine Steuerschaltung vermieden werden. Die Steuerschaltung kann beispielsweise aus einem Temperatursensor, beispielsweise einen Messwiderstand, und einem Regler, beispielsweise in Form eines Mikroprozessors, aufgebaut sein.

Der Temperatursollwert des Gasstroms kann vom Hersteller fest vorgegeben sein, beispielsweise mit 42°C. Der Temperatursollwert kann auch vom Benutzer einstellbar sein. Hierfür kann ein Betätigungselement vorgesehen sein, beispielsweise in Form eines Drehknopfs oder einer Taste. Das Betätigungselement ist bevorzugt Teil des Handstücks.

Ein Temperatursollwert im Bereich von 37° bis 42°, insbesondere im Bereich von 40 bis 42° ist besonders vorteilhaft, da eine erhöhte Temperatur auch eine Keimreduktion bewirkt. Besondere vorteilhaft ist es, wenn der Gasstrom eine Temperatur von 42° C hat, da bei dieser Temperatur keine Gewebeschädigung zu befürchten ist, aber eine deutliche Keimreduktion im Wurzelkanal erzielt wird.

Eine weitere vorteilhafte Weiterbildung der Erfindung sieht vor, dass die Kanüle seitliche Öffnungen für einen Gasaustritt aufweist. Die Kanüle ist also beispielsweise ein Rohr oder ein Schlauch mit Öffnungen in der Mantelfläche. Bei einer Kanüle, die nur eine einzige Austrittsöffnung, nämlich an ihrem Ende, aufweist, kann es dazu kommen, dass diese Öffnung in dem Wurzelkanal blockiert wird und dann kein Gas mehr austreten kann. Bei einer Kanüle mit mehreren Gasaustrittsöffnungen ist es dagegen sehr unwahrscheinlich, dass der Gasaustritt verhindert wird.

Eine weitere vorteilhafte Weiterbildung der Erfindung sieht vor, dass die Außenseite der Kanüle Vertiefungen und/oder Vorsprünge aufweist. Diese Maßnahme reduziert die Gefahr, dass ein Wurzelkanal durch eine in ihn eingeführte Kanüle soweit verschlossen wird, dass eingeblasenes Gas nicht mehr an der Außenseite der Kanüle entlang aus dem Wurzelkanal austreten kann. Vorsprünge, beispielsweise Noppen, oder Vertiefungen, beispielsweise Nuten, können dafür sorgen, dass die Kanüle nicht rundherum dicht an der Innenseite des Wurzelkanals anliegt.

Eine weitere vorteilhafte Weiterbildung der Erfindung sieht vor, dass die Kanüle Längenmarkierungen, beispielsweise quer zu ihrer Längsrichtung verlaufende Striche, trägt, die in vorgegebenen Abständen von dem Kanülenende, das bestimmungsgemäß bei einer Trocknung in einen Wurzelkanal eingeführt wird, angebracht sind. Diese Längenmarkierungen erleichtern es einem Zahnarzt zu erkennen, wie weit die Kanüle im Moment in den Wurzelkanal eingeführt ist. Derartige Längenmarkierungen sind üblicherweise auch an Instrumenten zum Reinigen von Wurzelkanälen angebracht und werden manchmal auch als Abstandsmarkierungen bezeichnet, da sie den Abstand zum Ende des Instruments markieren.

Eine weitere vorteilhafte Weiterbildung der Erfindung sieht eine Gastrocknungseinrichtung vor. Beispielsweise kann der einzublasende Luftstrom durch eine mit Trocknungsmittel gefüllte Kammer geleitet werden, bevor er in die Kanüle eingeleitet wird. Je weniger Feuchtigkeit der eingeblasene Gasstrom enthält, desto besser kann er einen Wurzelkanal trocknen.

Weitere Einzelheiten und Vorteile der Erfindung werden an einem Ausführungsbeispiel unter Bezugnahme auf die beigefügten Zeichnungen erläutert. Es zeigen:
- Fig. 1: eine schematische Darstellung einer Vorrichtung zur Wurzelkanaltrocknung, und
- Fig. 2: eine Kanüle dieser Vorrichtung in einem Längsschnitt.

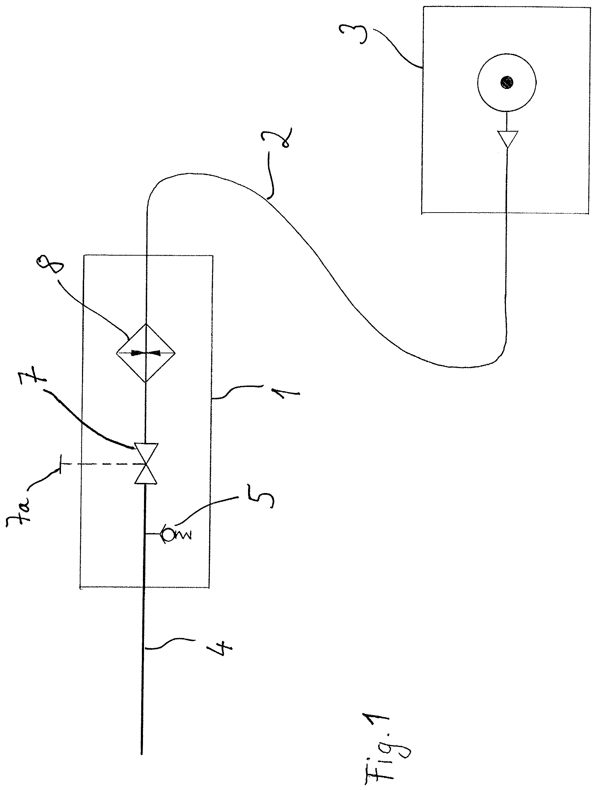

Mit der in Figur 1 dargestellten Vorrichtung kann ein Wurzelkanal durch ein Einblasen eines Gasstroms getrocknet werden. Die Vorrichtung hat dazu ein Handstück 1, das über einen Schlauch 2 an eine Pumpe 3 oder eine andere Quelle eines Gasstroms, beispielsweise einen Druckgasbehälter, angeschlossen werden kann. Das Handstück 1 trägt eine Kanüle 4, die in einen Wurzelkanal eingeführt werden kann. Die Kanüle 4 kann beispielsweise in das Handstück 1 gesteckt sein und dort klemmend gehalten werden, so dass sie sich leicht austauschen lässt.

Das Handstück 1 weist ein Sicherheitsventil 5 auf. Sobald der Druck des Gasstroms in dem Handstück 1 einen kritischen Schwellenwert erreicht, öffnet sich das Sicherheitsventil 5. Bei geöffnetem Sicherheitsventil 5 kann Gas aus einer dafür vorgesehenen Öffnung des Handstücks 1 austreten. Das Sicherheitsventil 5 verhindert auf diese Weise, dass der Gasdruck in dem Handstück 1 bzw. in der Kanüle 4 und damit in einem Wurzelkanal über einen vorgegebenen Schwellenwert hinaus ansteigt. Dies ist wichtig, da beim Einführen der Kanüle 4 in einen engen Wurzelkanal die Gefahr besteht, dass der eingeblasene Gasstrom nicht mehr an der Außenseite der Kanüle 5 vorbei aus dem Wurzelkanal austreten kann und deshalb der Gasdruck erhöht. Bei hohem Druck kann eingeblasenes Gas über die Wurzelspitze in periapikales Gewebe eindringen. Durch das Sicherheitsventil 4 wird dieser Gefahr entgegengewirkt. Das Sicherheitsventil 4 kann federbelastet sein.

Das Handstück 1 enthält zusätzlich ein Absperrventil 7, das je nach Schaltstellung einen Gasstrom durchlässt oder blockiert. Das Absperrventil 7 kann von einem Benutzer über ein Betätigungselement 7a betätigt werden. Das Absperrventil 7 ist stromabwärts von dem Sicherheitsventil 6 angeordnet. Das Absperrventil 7 kann eine Feder enthalten, die es in seine Schließstellung zurücksetzt, wenn das Betätigungselement 7a, beispielsweise eine Taste, nicht (mehr) betätigt bzw. gedrückt wird.

Bei dem dargestellten Ausführungsbeispiel enthält das Handstück 1 ein elektrisches Heizelement 8 zum Erwärmen des Gasstroms, beispielsweise ein PTC Heizelement, das bei einer kritischen Temperatur einen sprunghaften Anstieg seines elektrischen Widerstands aufweist. Ein Heizelement kann aber beispielsweise auch in die Pumpe 3 integriert oder an dem die Pumpe 3 mit dem Handstück 1 verbindenden Schlauch 2 angebracht sein.

Die Temperatur des Gasstroms, der im einfachsten Fall ein Luftstrom sein kann, wird mit einer Steuerschaltung auf einen Sollwert geregelt. Ein Temperatursensor zur Messung der Gastemperatur kann in dem Handstück 1, dem Schlauch 2 oder der Pumpe 3 angeordnet sein.

Der Temperatursollwert kann vom Hersteller fest vorgegeben sein oder vom Benutzer einstellbar sein, beispielsweise mit einem Betätigungselement am Handstück 1. Vorteilhaft sind Temperatursollwerte im Bereich von 37° bis 42°, insbesondere von 42°. Mit einem Gasstrom, der eine solche Temperatur hat, lässt sich eine Reduktion der Keimbesiedelung des Wurzelkanals erreichen, ohne dass die Gefahr einer Verletzung bzw. Gewebeschädigung durch Temperatureinwirkung besteht.

Um die Trocknungswirkung des Gasstroms zu erhöhen, kann eine Gastrocknungseinrichtung vorgesehen sein. Eine einfache Gastrockung lässt sich erreichen, indem der Gasstrom einem Trocknungsmittel, beispielsweise Silikagel oder einer anderen hygroskopischen Chemikalie ausgesetzt wird. Beispielsweise kann die Pumpe 3 oder das Handstück 1 eine Kammer aufweisen, die zur Aufnahme von Trocknungsmittel vorgesehen ist und von dem Gasstrom durchströmt wird. Die Gastrocknungseinrichtung kann auch aufwändiger sein, beispielsweise indem ein Luftstrom zunächst abgekühlt wird, um darin enthaltene Feuchtigkeit zu kondensieren, und erst danach über der Pumpe 3 zu dem Handstück 1 gefördert wird.

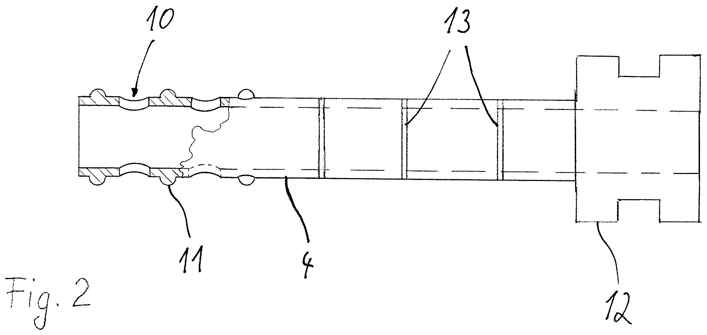

In Figur 2 ist ein Ausführungsbeispiel der in das Handstück 1 einzusetzenden Kanüle 4 dargestellt. Die Kanüle 4 ist ein Schlauch aus eine superelastischen Legierung, beispielsweise Nitinol. Superelastische Legierungen werden in der Literatur manchmal auch als Formgedächtnislegierungen bezeichnet.

Die Kanüle 4 weist seitliche Gasaustrittsöffnungen 10 auf. Ein eingeblasener Gasstrom deshalb nicht nur an dem Ende der Kanüle 5, sondern auch aus deren Mantelfläche austreten. An ihrer Außenseite weist die Kanüle 4 mehrere Vorsprünge 11, beispielsweise in Form von Noppen, auf. Wenn die Kanüle 4 in einen Wurzelkanal eingeführt ist, wirken die Vorsprünge 11 als Abstandshalter und sorgen dafür, dass zwischen der Außenseite der Kanüle und der Innenseite des Wurzelkanals ein Freiraum bleibt, durch den der eingeblasene Gasstrom aus dem Wurzelkanal austreten kann. Derselbe Effekt lässt sich mit Vertiefungen an der Außenseite der Kanüle 4, beispielsweise Nuten erreichen.

Die Kanüle 4 hat an einem Ende einen Anschlussabschnitt 12 zur Befestigung der Kanüle 4 in einem Handstück 1. Der Anschlussabschnitt 12 ist bevorzugt hinterschnitten. Der Anschlussabschnitt kann beispielsweise für einen Bajonettverschluss ausgebildet sein.

Die Kanüle 4 trägt Längenmarkierungen 13, beispielsweise in Form von umlaufenden Ringen, die in vorgegebenen Abständen von dem freien Ende der Kanüle angebracht sind. An diesen Längenmarkierungen kann ein Zahnarzt bei der Behandlung ablesen, wie weit die Kanüle in einem Wurzelkanal steckt. Zudem kann die Kanüle eine Markierung, beispielsweise eine Farbmarkierung, tragen, welche die Dicke der Kanüle angibt. Falls Kanülen unterschiedlicher Dicke zum Einsatz in Wurzelkanälen verschiedener Größe vorgesehen sind, ermöglicht eine Markierung eine einfache Unterscheidung verschiedener Kanülen.

Die Kanüle 4 kann sich zu ihrem freien Ende hin verjüngen. Dies ist vorteilhaft, da sich auch Wurzelkanäle verjüngen.

## Patentansprüche

1. Vorrichtung zur Trocknung eines Wurzelkanals, mit
einer Kanüle (4) zum Einblasen eines Gasstroms in den Wurzelkanal,
einem Handstück (1) zum Halten der Kanüle (4), **dadurch gekennzeichnet,**
**dass** das Handstück ein Sicherheitsventil (5) aufweist, um einen Anstieg des Gasdrucks in der Kanüle (4) über einen vorgegebenen Schwellenwert hinaus zu verhindern.

2. Vorrichtung nach Anspruch 1, **gekennzeichnet durch** ein elektrisches Heizelement (8) zum Erwärmen des Gasstroms.

3. Vorrichtung nach Anspruch 2, **gekennzeichnet durch** eine Steuerschaltung zum Regeln der Temperatur des Gasstroms auf einen Sollwert.

4. Vorrichtung nach Anspruch 3, **gekennzeichnet durch** wenigstens ein Betätigungselement zum Einstellen des Sollwerts.

5. Vorrichtung nach einem der vorstehenden Ansprüche, **dadurch gekennzeichnet, dass** die Kanüle (4) seitliche Öffnungen (10) zum Austreten von Gas aufweist.

6. Vorrichtung nach einem der vorstehenden Ansprüche, **dadurch gekennzeichnet, dass** das Handstück (1) ein Absperrventil (7) zum Abschalten des Gasstroms aufweist.

7. Vorrichtung nach einem der vorstehenden Ansprüche, **gekennzeichnet durch** eine Gastrocknungseinrichtung.

8. Vorrichtung nach einem vorstehenden Ansprüche, **dadurch gekennzeichnet, dass** die Kanüle (4) austauschbar an dem Handstück (1) angebracht ist.

9. Vorrichtung nach einem der vorstehenden Ansprüche, **dadurch gekennzeichnet, dass** die Außenseite der Kanüle (4) Vertiefungen und/oder Vorsprünge (11) aufweist.

## Claims

1. A device for drying a root canal, comprising
a cannula (4) for injecting a gas stream into the root canal,
a handpiece (1) for holding the cannula (4), **characterized in that**
the handpiece has a safety valve (5) to prevent the gas pressure in the cannula (4) from increasing above a predefined threshold level.

2. The device according to Claim 1, **characterized by** an electric heating element (8) for heating the gas stream.

3. The device according to Claim 2, **characterized by** a control circuit for regulating the temperature of the gas stream at a setpoint value.

4. The device according to Claim 3, **characterized by** at least one operating element for adjusting the setpoint value.

5. The device according to any one of the preceding claims, **characterized in that** cannula (4) has lateral openings (10) for the gas to escape.

6. The device according to any one of the preceding claims, **characterized in that** the handpiece (1) has a cut-off valve (7) for cutting off the gas stream.

7. The device according to any one of the preceding claims, **characterized by** a gas drying device.

8. The device according to any one of the preceding claims, **characterized in that** the cannula (4) is mounted replaceably on the handpiece (1).

9. The device according to any one of the preceding claims, **characterized in that** the outside of the cannula (4) has recesses and/or protrusions (11).

## Revendications

1. Dispositif pour assécher un canal radiculaire, doté
d'une canule (4) pour insuffler un courant gazeux dans le canal radiculaire,
d'une pièce manuelle (1) pour tenir la canule (4), **caractérisé en ce**
**que** la pièce manuelle présente une soupape de sécurité (5) afin d'empêcher une augmentation de la pression gazeuse dans la canule (4) au-delà d'une valeur de seuil prédéterminée.

2. Dispositif selon la revendication 1, **caractérisé par** un élément chauffant (8) électrique pour le chauffage du courant gazeux.

3. Dispositif selon la revendication 2, **caractérisé par** un circuit de commande pour le réglage de la température du courant gazeux à une valeur souhaitée.

4. Dispositif selon la revendication 3, **caractérisé par** au moins un élément d'actionnement pour le réglage de la valeur souhaitée.

5. Dispositif selon l'une des revendications précédentes, **caractérisé en ce que** la canule (4) présente des orifices (10) latéraux pour la sortie de gaz.

6. Dispositif selon l'une des revendications précédentes, **caractérisé en ce que** la pièce manuelle (1) présente une vanne d'arrêt (7) pour couper le courant gazeux.

7. Dispositif selon l'une des revendications précédentes, **caractérisé par** un système de séchage de gaz.

8. Dispositif selon l'une des revendications précédentes, **caractérisé en ce que** la canule (4) est rapportée sur la pièce manuelle (1) en pouvant être échangée.

9. Dispositif selon l'une des revendications précédentes, **caractérisé en ce que** la face extérieure de la canule (4) présente des cavités et/ou des saillies (11).
